**Europäisches Patentamt**

**European Patent Office**

**Office européen des brevets**

(11) Numéro de publication: **0 260 193**
**A1**

## (12) DEMANDE DE BREVET EUROPEEN

(21) Numéro de dépôt: **87401994.6**

(22) Date de dépôt: **07.09.87**

(51) Int. Cl.⁴: **C 22 B 26/10**
**G 21 C 19/30**

(30) Priorité: **10.09.86 FR 8612657**

(43) Date de publication de la demande:
**16.03.88 Bulletin 88/11**

(84) Etats contractants désignés: **BE DE GB IT**

(71) Demandeur: **COMMISSARIAT A L'ENERGIE ATOMIQUE**
**31/33, rue de la Fédération**
**F-75015 Paris (FR)**

(72) Inventeur: **Latge, Christian**
**Rés. La Grande Terrasse Impasse Sainte Eutrope**
**F-13100 Aix en Provence (FR)**

(74) Mandataire: **Mongrédien, André et al**
**c/o BREVATOME 25, rue de Ponthieu**
**F-75008 Paris (FR)**

(54) **Piège froid de purification des métaux liquides contenant des impuretés dissoutes.**

(57) Il comprend plusieurs modules de refroidissement (23, 24, 25) fonctionnant indépendamment de façon à provoquer la cristallisation des impuretés, un conduit (2) d'amenée du métal liquide, un conduit d'évacuation (4) après purification et une série de plateaux (6, 7) disposés en chicane sur lesquels se cristallisent les impuretés.

Ce piège froid est plus particulièrement adapté à la purification du sodium fondu utilisé dans certaines centrales nucléaires.

FIG. 1

EP 0 260 193 A1

**Description**

## PIEGE FROID DE PURIFICATION DES METAUX LIQUIDES CONTENANT DES IMPURETES DISSOUTES

La présente invention se rapporte à un piège froid pour métal liquide, tel qu'on en trouve dans l'industrie nucléaire, et à des procédés d'utilisation de ce piège.

Les réacteurs nucléaies à neutrons rapides utilisent le sodium liquide comme fluide de refroidissement, aussi bien pour le circuit primaire que pour les circuits secondaires. La longueur des cycles de fonctionnement, ainsi que leur nombre, explique qu'ils se chargent peu à peu en impuretés, principalement de l'oxyde et de l'hydrure de sodium. Ces pollutions peuvent être produites en continu au cours du fonctionnement de la centrale, par exemple par diffusion d'hydrogène au travers des parois du génératur de vapeur vers le circuit secondaire, ou par activation de l'acier, ou encore par diffusion à travers les gaines du combustible de certains produits à de fission tels que des protons et du tritium dans le cas du circuit primaire. Les pollutions peuvent aussi être discontinues : les manutentions des assemblages à chaque cycle, et occasionnellement de certains composants, polluent le sodium par introduction de gaz adsorbés et d'oxydes métalliques ; enfin, des fuites du génératur de vapeur peuvent conduire à des réactions sodium-eau dans le circuit secondaire, avec production d'hydrogène et d'hydroxyde de sodium, lequel peut se décomposer en hydrure et en oxyde.

Les conséquences sont la corrosion des surfaces métalliques des circuits par l'oxygène et leur fragilisation par l'hydrogène, leur pollution par les produits de corrosion véhiculés par le sodium, activés dans le coeur, et déposés dans les zones froides qui sont ainsi contaminées, ce qui peut engendrer des problèmes de manutention et de maintenance, la perturbation, par variation de la concentration en hydrogène, des mesures de détection des fuites du générateur de vapeur dans le circuit secondaire, et enfin la cristallisation de l'oxyde et de l'hydrure de sodium aux points froids des circuits, qui peut entraîner le bouchage des sections rétrécies ou endommager les pompes.

C'est pour éliminer ces pollutions que les circuits de sodium sont munis de pièges froids qui consistent essentiellement en un réservoir que l'on refroidit de manière à ce que les impuretés cristallisent et soient retenues dans ce piège ; à cet effet on peut disposer un élément de rétention constitué de laine métallique à travers lequel le sodium est contraint de passer ; l'écoulement, qui devient turbulent, et la présence d'un réseau serré de fils favorisent en effet la germination des cristaux. Le bon fonctionnement du réacteur nécessite, d'une part, l'utilisation permanente d'un piège froid, en régime dit "de purification d'entretien", car les impuretés créées par la pollution continue doivent être fixées avec une vitesse égale à la vitesse de pollution, et, d'autre part, occasionnellement, une utilisation plus intense du piège, obtenue en augmentant le débit, au cours d'une "campagne de purification", pour diminuer la concentration d'oxygène et d'hydrogène due à une pollution discontinue. Plusieurs problèmes restent posés avec les pièges froids actuellement connus.

Tout d'abord l'élément de rétention des impuretés est susceptible d'un encrassement rapide, qui peut conduire à son colmatage et obliger à changer plusieurs fois de piège au cours de la vie de la centrale.

Ensuite le volume du piège froid n'est pas très bien utilisé, car la température d'entrée dans le piège est supérieure à la température d'apparition des cristaux pour la concentration d'impuretés correspondante. Il en résulte qu'une partie de la longueur du piège, disposée près de l'entrée, reste inutilisée. Cette longueur inutilisé du piège est d'ailleurs plus importante en régime de purification d'entretien que lors d'une campagne de purification. En effet, les pièges de l'art antérieur travaillent tous à gradient thermique longitudinal constant et l'écart entre la température d'apparition des cristaux et celle du point froid est plus petit en régime d'entretien que lors d'une campagne de purification.

La présente invention permet de résoudre en grande partie ces divers problèmes au moyen d'un piège froid de construction simple et apte à être utilisé pendant toute la vie de la centrale.

Ce piège froid comprend plus précisément un conduit d'amenée du métal liquide pollué à purifier à l'intérieur d'un réservoir, un conduit d'évacuation du métal liquide purifié hors de ce réservoir, et des moyens de refroidissement autour de ce réservoir, caractérisé en ce qu'il comprend une pluralité de plateaux ajourés et garnis de laine métallique, disposés perpendiculairement à la direction globale de l'écoulement de métal liquide à purifier, espacés les uns des autres, et présentant un évidement décalé d'un plateau à l'autre de manière à permettre un écoulement du métal liquide, en chicane, entre tous les plateaux.

Ce dispositif de plateaux est complété par une pluralité de modules de refroidissement fonctionnant indépendamment et disposés autour du réservoir.

La constitution et le fonctionnement de ce piège seront mieux compris à l'aide des figures dont la description va suivre, figures données à titre illustratif et nullement limitatif, et qui représentent des vues en coupe générale longitudinale de deux modes de réalisation du piège.

Avantageusement, les plateaux comprennent alternativement des premiers plateaux qui présentent un évidement périphérique délimité par le réservoir, et des seconds plateaux qui présentent un évidement central. Dans ce cas, selon une réalisation avantageuse, le tuyau d'évacuation du métal purifié est disposé dans le réservoir, le métal purifié parcourant le tuyau d'évacuation en sens inverse du métal à purifier, et le tuyau d'évacuation passe dans l'évidement des seconds plateaux et soutient les premiers plateaux.

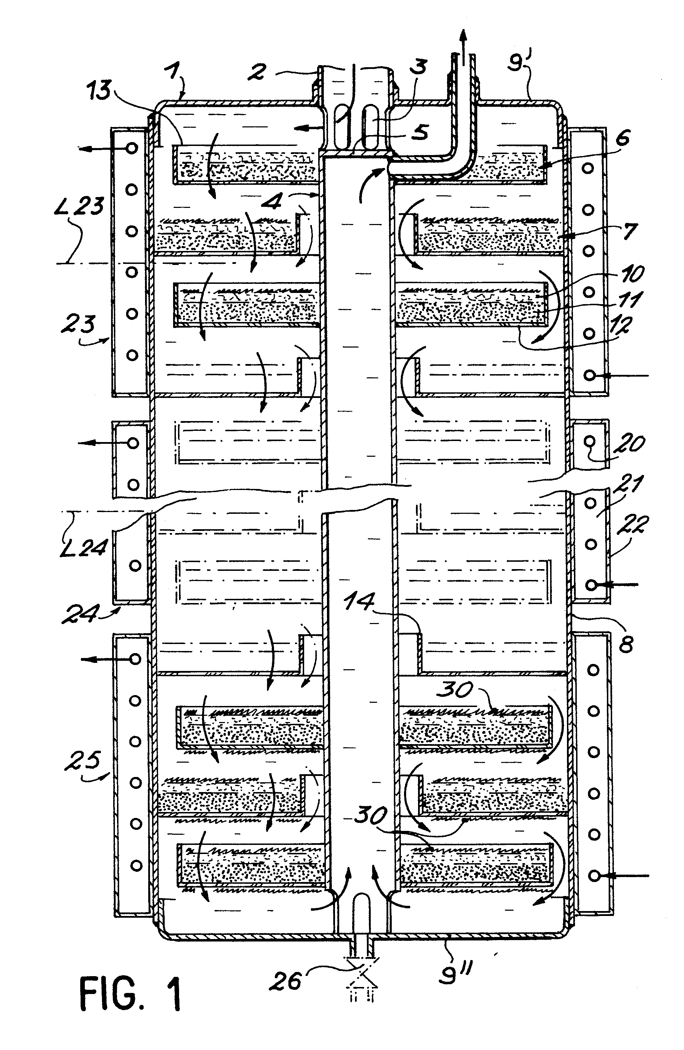

Dans le mode de réalisation de l'invention représenté sur la figure 1, le piège est à symétrie de révolution, ce qui est usuel, mais non nécessaire à la réalisation de l'invention.

Ce piège comprend un réservoir 1 limité par une virole latérale 8 et par dux fonds 9', 9", alimenté au moyen d'un conduit d'amenée 2 en sodium liquide, qui est ensuite évacué par un tuyau d'évacuation 4, ici à contre-courant de bas en haut, par une cheminée axiale au centre du réservoir 1 qui constitue un économiseur.

Le conduit d'amenée 2 assure une alimentation uniforme du réservoir 1 au moyen d'ouvertures 3 disposées régulièrement sur la circonférence de ce tuyau, près d'une extrémité fermée 5 du tuyau 2, qui débouchent en haut du réservoir 1.

A l'intérieur du réservoir 1 sont disposés plusieurs plateaux 6 et 7 de rétention des impuretés du sodium liquide, qui sont de deux types : les uns 6 sont fixés sur la cheminée axiale d'évacuation 4 et ont un diamètre plus petit que celui de la virole latérale 8 ; les autres 7 alternés avec les précédents sont fixés sur la virole 8 et présentent en leur centre un évidement de diamètre plus grand que le diamètre de la cheminée d'évacuation 4.

Toutefois, ces plateaux 6 et 7 présentent des points communs importants : ils sont ajourés, c'est-à-dire constitués d'un fond 12 perméable au métal liquide, tel qu'une armature grillagée, qui est rcouvert d'une ou plusieurs couches de laine métallique, par exemple deux couches, l'une supérieure 10 et l'autre inférieure 11, cette dernière couche 11 étant de densité éventuellement double de la première.

La laine métallique est maintenue en place par un rebord cylindrique 13 fixé sur le fond 12 et de hauteur supérieure à la hauteur totale des deux couches 10 et 11 ; ce rebord 13 entoure le bord extérieur des plateaux 6 ; les plateaux 7 sont, eux, entourés sur leur bord intérieur par le rebord 14.

Le dispositif de refroidissement est constitué de plusieurs modules qui fonctionnent indépendamment. Ils sont disposés en série sur le pourtour du réservoir 1 et ici au nombre de trois ; leur conformation est identique : il peut s'agir d'un serpentin 20 parcouru par un fluide organique baignant dans un autre fluide 21, qui sert de joint thermique à l'intérieur d'une enveloppe 22 dans laquelle stagne le fluide 21. Il peut s'agir également d'un système de refroidissement par air.

Le fluide de refroidissement est déterminé par la construction de l'installation. Ici, l'air peut être avantageusement utilisé. Le fluide stagnant 21 est généralement l'eutectique NaK qui n'implique pas de conséquences dommageables en cas de rupture de la paroi du réservoir 1 et de mélange avec le sodium fondu.

Enfin, une vanne 26 est installée en bas du réservoir 1 pour effectuer la vidange de celui-ci.

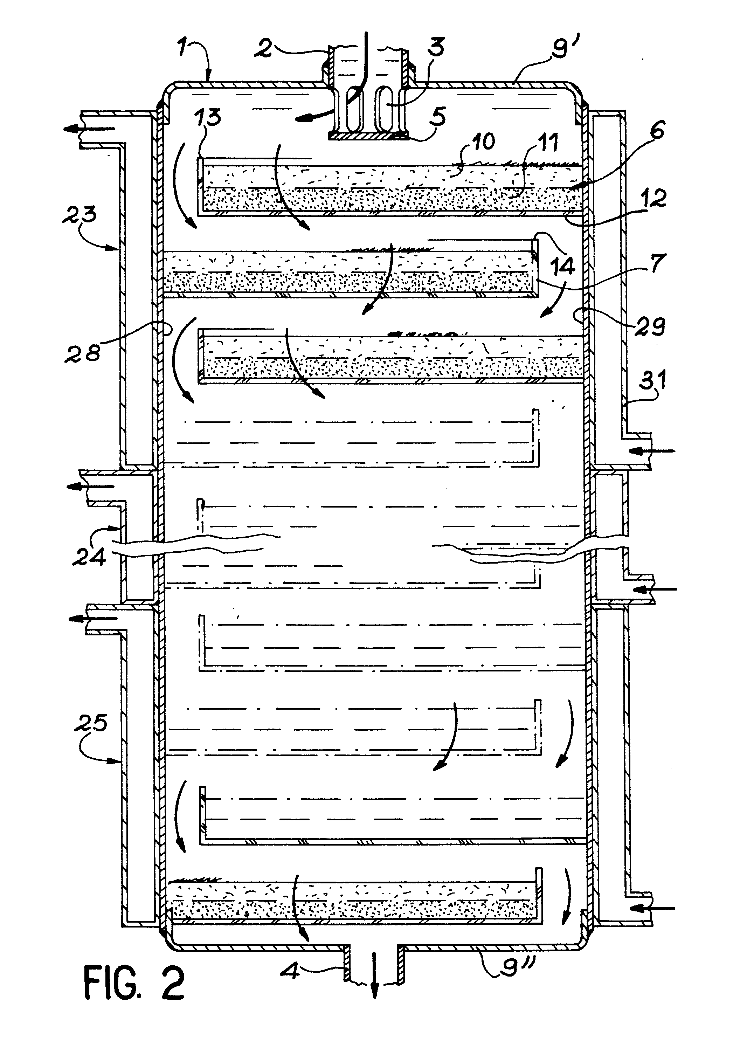

Selon un second mode de réalisation, représenté sur la figure 2, le piège admet un plan de symétrie selon la direction globale de l'écoulement, et la section du réservoir normale au plan de coupe est rectangulaire ; les plateaux 6, 7 sont fixés alternatiement sur l'une, puis l'autre de deux parois opposées 28, 29 du réservoir ; le fluide de refroidissement est, par exemple, de l'air circulant, pour chaque module de refroidisement 23, 24 et 25, entre le réservoir 1 et une calandre 31 ; le sodium épuré est évacué directement à l'extérieur du piège par le tuyau d'évacuation 4. Mais le fonctionnement et les avantages de cette seconde réalisation de l'invention sont les mêmes ; la suite de la description peut s'appliquer indifféremment aux deux figures. Par ailleurs, les systèmes de refroidissement représentés figures 1 et 2 sont équivalents et peuvent être intervertis.

Le dispositif objet de l'invention constitue un compromis favorable entre des exigences parfois contradictoires ; les paramètres qui influent sur la qualité d'un piège froid sont en effet fort nombreux. Les fonctionnements que l'on explicite ci-dessous justifient les dispositions prises.

On rappelle tout d'abord que l'équation qui régit le piège froid est :

$$V = E \times (Ce-C) \times D \text{ où } E = (Ce-Cs)/(Ce-C)$$

V est la vitesse de purification, qui représente en fait le débit massique d'impuretés fixées par le piège D est le débit massique de métal liquide qui circule dans le piège, Ce et Cs sont les concentrations en impuretés du métal liquide à l'entrée et à la sortie du piège, C enfin est la solubilité des impuretés à la température du point froid du piège.

Comme D dépend d'impératifs étrangers au piège froid, le terme sur lequel on peut essayer d'agir est l'efficacité E, qui est le rapport entre l'épuration réelle et l'épuration maximale.

Prenons un exemple où les trois modules de refroidissement 23, 24, 25 sont susceptibles de faire baisser chacun la température du sodium fondu de 8°C.

Dans le cas d'une campagne de purification, on peut, par un choix judicieux du débit, fixer la température du point froid du piège à 20°C au-dessous de celle de l'apparition des cristaux.

Si on met alors en service les trois modules de refroidissement 23, 24, 25, assurant ainsi un refroidissement total de 24°C, un refroidissement de 4°C du sodium entrant dans le piège suffit à provoquer le début de la cristallisation des impuretés.

La cristallisation des impuretés commence donc près de la ligne L23 à mi-hauteur du module 23 : une partie est fixée sur les plateaux 6 et 7 qui sont traversés par le sodium liquide selon les flèches portées sur la partie gauche de la figure 1 : l'alternance des plateaux 6 et 7 garantit que chaque filet fluide passera par au moins une partie d'entre eux ; de plus, les couches de laine métallique 10 et 11 créent un écoulement turbulent qui améliore leur capacité de rétention car les impuretés entrent plus facilement en contact avec les cristaux déjà formés, ce qui favorise la croissance des cristaux.

Le liquide ainsi purifié continue à descendre, sa température diminue progressivement et de nouvelles impuretés cristallisent et sont recueillies par les plateaux 6 et 7 suivants. Comme cette diminution est régulière, que les concentrations de saturation et de cristallisation varient à peu près régulièrement sur de petits intervalles de températures et que les plateaux 6 et 7 sont de structure identique, on peut conclure que leur encrassement est à peu près uniforme. Cette caractéristique est très importante car les colmatages locaux, dans des parties rétrécies et froides, sont une des causes qui limitent la durée de vie des pièges froids.

Le fonctionnement prolongé de l'installation entraîne l'accumulation des produits de pollution cristallisés. Plusieurs phénomènes apparaissent alors, qui ont des influences apparemment antagonistes sur son efficacité.

Une croûte solide 30 se forme en majeure partie à la surface de la couche de laine métallique 10, et dans une moindre mesure sur le fond 12 des plateaux 6 et 7. Elle est maintenue par les rebords 13 et 14 qui servent également à retenir par décantation certains produits d'une éventuelle réaction sodium-eau. En revanche, elle oblige une partie de plus en plus grande du sodium liquide à contourner les plateaux 6 et 7. Lorsque cette croûte forme une carapace imperméable, le sodium circule suivant les flèches portées sur la partie droite du dessin (on a supposé que le plateau 6 le plus proche du conduit d'amenée 2 était situé dans une zone où les impuretés ne cristallisaient pas).

On constate donc que la plus grande partie du métal liquide est distante des surfaces solides, siège de la cristallisation, et que la surface du réservoir en face des plateaux 7 n'est plus en contact avec le sodium, ce qui est susceptible de diminuer l'efficacité du refroidissement. Cependant, la purification continue d'être assurée par diffusion vers les surfaces inférieures et supérieures des plateaux qui sont couvertes de cristaux. De plus, l'arête vive des rebords 13 et 14, la surface irrégulière de la couche 30 et le trajet très rallongé imposé aux veines fluides maintiennent la turbulence de l'écoulement, favorisant les phénomènes précités. L'efficacité d'un tel piège froid reste à peu près constante avec le temps, et voisine de l'unité.

En régime de purification d'entretien, on peut utiliser les modules de refroidissement 23, 24 et 25 séparément.

Pendant une période déterminée, après la mise en service du piège neuf, on peut faire, d'abord, fonctionner les modules inférieurs de manière à ensemencer le bas du piège. On peut ensuite faire fonctionner les modules supérieurs en mettant hors service les modules inférieurs. Une zone importante du piège reste alors isotherme et ensemencée, ce qui permet d'atteindre une efficacité égale à 1.

L'étape préliminaire consiste à mettre en service un nombre de modules de refroidissement, contigus et proches de l'entrée d conduit d'évacuation 4, suffisant pour provoquer la cristallisation d'impuretés : la mise en service des modules 24 et 25, si on reprend l'exemple employé plus haut, provoque ainsi un abaissement de température de 16° C. Si on ajuste le débit de manière que la température de saturation du sodium, correspondant à sa concentration en impuretés, soit supérieure de 12° C à celle du point froid, une cristallisation se produit sur les surfaces en-dessous de la ligne L24 à mi-hauteur du module 24. Les plateaux 6 et 7 situés au-dessous de L24 sont donc ensemencés de cristaux, et on poursuit cette opération jusqu'à ce que cet ensemencement soit jugé suffisant et recouvre les fils métalliques des couches 10 et 11 d'une pellicule mince à peu près continue.

On arrive alors à la seconde étape, qui consiste à mettre en service un nombre suffisant de modules de refroidissement contigus et proches du conduit d'amenée 2, pour provoquer la cristallisation d'impuretés, sur les pateaux 6 et 7 situés au-dessous de ces modules : la mise en service des modules 23 et 24 et l'arrêt du module 25 maintiennent le refroidissement global de 16° C mais c'est maintenant la ligne L23 à mi-hauteur du module 23 qui marque le début de l'apparition des impuretés cristallisées. La zone située en regard du module 25 devient isotherm et l'ensemencement réalisé auparavant favorise la croissance des cristaux d'impuretés sur ses plateaux 6 et 7 qui continuent donc à être utiles. Pendant cette seconde étape l'efficacité est égale à l'unité dans la mesure où on crée une zone isotherme à la température du point froid et ensemencée. On peut s'attendre à un encrassement à peu près régulier des plateaux 6 et 7, à l'exception de ceux situés au-dessus de la ligne L23, qui ne représentent qu'un sixième de l'installation. Sur des installations comparables mais dépourvues de refroidissement modulaire, ce volume mort est égal à la moitié, ou plus, du volume total.

Cette installation permet donc de résoudre de façon simple et économique le problème consistant à doter les circuits de sodium liquide de pièges froids de grande capacité prévus pour la durée de vie de la centrale, dont l'efficacité soit à peu près constante pendant tout ce temps, et qui se prêtent à des utilisations variées selon qu'on travaille en purification d'entretien ou en campagne de purification.

La présence de plateaux préalablement ensemencés dans des zones isothermes apporte un surcroît de rendement à l'installation ; enfin, la disposition en chicane des plateaux 6 et 7, outre qu'elle contribue réduire les variations d'efficacité au fur et à mesure de leur encrassement, permet d'éviter tout colmatage prématuré du piège froid, ce qui réduisait beaucoup la durée de vie des dispositifs précédents et surtout engendrait une grosse incertitude à cet égard. Ici, il n'y a aucun besoin de sur-dimensionner le piège.

## Revendications

1. Piège froid de purification de métal liquide comprenant un conduit d'amenée (2) du métal liquide purifier communiquant avec l'entrée d'un réservoir (1), un conduit d'évacuation (4) du métal purifié communiquant avec la sortie du réservoir (1) et des moyens de refroidissement (23, 24, 25) autour de ce réservoir (1), caractérisé en ce que lesdits moyens de refroidissement comprennent une pluralité de modules (23, 24, 25) fonctionnant indépendamment autour du réservoir (1), et en ce qu'il comprend en outre une pluralité de plateaux (6, 7) ajourés et garnis de laine métallique, disposés perpendiculairement à la direction globale de l'écoulement du métal liquide à purifier, espacés les uns des autres, et présentant un évidement décalé d'un plateau à l'autre de manière à permettre un écoulement du métal liquide en chicane entre tous les plateaux.

2. Piège froid selon la revendication 1, caractérisé en ce que les plateaux (6 et 7) comprennent un fond (12) rigide perméable au métal liquide, deux couches (10 et 11) de laine métallique, la couche (11) en contact avec le bord (12) étant la plus dense, et un rebord (13 et 14) autour de l'évidement et plus haut que l'épaisseur totale des deux couches de laine métallique.

3. Piège froid selon l'une quelconque des revendications 1 ou 2, caractérisé en ce que les plateaux comprennent alternativement des premiers plateaux (6) qui présentent un évidement périphérique délimité par le réservoir (1), et des seconds plateaux (7) qui présentent un évidement central.

4. Piège froid selon la revendication 3, caractérisé en ce que le tuyau d'évacuation (4) du métal purifié est disposé dans le réservoir (1), le métal purifié parcourant le tuyau d'évacuation (4) en sens inverse du métal à purifier, en ce que le tuyau d'évacuation passe dans l'évidement des seconds plateaux (7) et soutient les premiers plateaux (6).

5. Piège froid selon l'une quelconque des revendications 1 ou 2, caractérisé en ce que les plateaux comprennent alternativement des premiers plateaux (6) qui présentent un évidement près d'une première paroi (28) du réservoir (1), et des seconds plateaux qui présentent un évidement près d'une seconde paroi (29) du réservoir (1) opposée à la première paroi (28).

6. Piège froid selon l'une quelconque des revendications 1 à 5, caractérisé en ce que les modules de refroidissement (23, 24, 25) comprennent chacun un serpentin (20) parcouru par un fluide organique et plongeant dans un liquide stagnant (21).

7. Piège froid selon l'une quelconque des revendications 1 à 5, caractérisé en ce que les modules de refroidissement (23, 24, 25) comprennent chacun une calandre (31) enveloppant le réservoir (1) et parcourue par un courant d'air.

8. Piège froid selon l'une quelconque des revendications 1 à 7, caractérisé en ce que les modules de refroidissement (23, 24, 25) sont au nombre de trois.

0260193

FIG. 1

0260193

FIG. 2

# RAPPORT DE RECHERCHE EUROPEENNE

Office européen des brevets

Numéro de la demande

EP 87 40 1994

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | NUCLEAR ENGINEERING, vol. 9, janvier 1964, pages 10-16, London, GB; J.L. PHILIPS: "Achievement of full power operation of the DFR" * Page 14; figure 6 * | | C 22 B 26/10 G 21 C 19/30 |
| A | US-A-3 483 980 (J.T. COCHRAN) | | |
| A | US-A-3 831 912 (SHIGEHIRO SHIMOYASHIKI) | | |
| A | US-A-2 815 277 (W.H. BRUGGEMAN) | | |
| A | US-A-2 745 552 (W.H. BRUGGEMAN) | | |
| A | EP-A-0 184 488 (NOVATOME) | | |
| A | EP-A-0 109 877 (NOVATOME) | | |
| A | FR-A-2 412 915 (HITACHI LTD) | | |

DOMAINES TECHNIQUES RECHERCHES (Int. Cl.4)

C 22 B
G 21 C

Le présent rapport de recherche a été établi pour toutes les revendications

| Lieu de la recherche | Date d'achèvement de la recherche | Examinateur |
|---|---|---|
| LA HAYE | 27-10-1987 | JACOBS J.J.E.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82